## Europäisches Patentamt
## European Patent Office
## Office européen des brevets

(19)

(11) Publication number: **0 033 603**
A2

(12)
# EUROPEAN PATENT APPLICATION

(21) Application number: **81300205.2**

(22) Date of filing: **16.01.81**

(51) Int. Cl.³: **B 01 D 25/04**

(30) Priority: **24.01.80 US 114968**

(43) Date of publication of application:
**12.08.81 Bulletin 81/32**

(84) Designated Contracting States:
**CH DE FR GB IT LI**

(71) Applicant: **Schneider, John Russel**
**26 Cove Road**
**Belvedere California 94920(US)**

(72) Inventor: **Schneider, John Russel**
**26 Cove Road**
**Belvedere California 94920(US)**

(74) Representative: **Jack, Bruce James et al,**
**FORRESTER & BOEHMERT Widenmayerstrasse 5/IV**
**D-8000 Munchen 22(DE)**

(54) A filter plate.

(57) In a plate type filter apparatus comprised of a stack of improved filter plates (22) which are separable to allow for insertion of sheet type filter media between adjacent plates and are then movable together so that an inlet chamber (50) for dirty liquid and a collection chamber (48) for clean, filtered liquid are formed on opposite sides of each filter media sheet. Each filter plate is comprised of a central planar member (42) with continuous side wall (44) and end wall members (46) around it to form upper and lower chambers that extend above and below. An elongated manifold chamber (62) attached to each opposite side wall and covers a series of side wall openings (64) into the bottom chamber (50) of the central member on one side and into its top chamber (48) from the other side wall. A series of fluid distribution members (68) for incoming dirty liquid is aligned with the side inlet openings (64) and extend to the opposite side wall. Below these transverse distribution members the inner surface of the side and end walls is sloped outwardly (74) to increase the area of the filter media with the inlet chamber and also to prevent the accumulation of filter media cake on its inner sides.

FIG _ 5

COMPLETE DOCUMENT

A Filter Plate

THIS INVENTION relates to liquid filtering apparatus of the separable plate type and more particularly to an improved filter plate for such apparatus. Thus the invention relates to a filter plate for a liquid filtering apparatus comprising a stack of filter plates on a base support, means for separating the plates to allow the installation of sheets of filter media between adjacent plates and means for closing the plates together to form inlet chambers and colletion chambers on opposite sides of each said sheet of filter media, said filter plate comprising: a central planar member; side walls and end walls connected to the sides and ends of said planar member and connected together at their ends to form a continuous rectangular barrier that extends above and below said planar member, said barrier forming an inlet chamber for dirty liquid below said planar member and a collection chamber above said planar member.

In previous plate type filters, such as shown in U.S.A. Patent Specification No.3,608,734, a plurality of filter plates is arranged in a vertical stack and a mechanism is provided for separating the plates to allow for the insertion of sheets of filter media between adjacent plates. Thereafter, the plates are moved back together to seal against the various filter media sheets and they form an inlet chamber for dirty liquid on the upper side of each sheet and a collection chamber for clean filtrate on the lower side of each sheet. A manifold of conduits for a common inlet pipe is connected to the inlet chambers and another manifold of conduits for a common outlet pipe is connected to the collection chambers of the plates. In the design of filter plates for such filtering apparatus, it is often more efficient to maximize their size, and thus the filtering area, in order to provide the most efficient apparatus. Heretofore, this presented certain problems, one of which was to provide for the influx of dirty liquid into a relatively large inlet chamber in such a manner that filter aid in the incoming liquid would be evenly distributed on the filter media and also would not disturb, wash out, or errode the filter cake that is built up on the sheet media. Another difficulty in providing such relatively large filter plates was in providing a structure with adequate strength and yet one that was not excessively heavy and therefore difficult or cumbersome to lift during plate separation.

It is therefore a general object of the present invention to provide an improved filter plate that solves the aforesaid problems.

Another object of the invention is to provide a filter plate that distributes liquid flowing into the collection chamber in such a manner that no erosion or disturbance of the filter cake will occur, even at maximum flow rates.

According to this invention there is provided a filter plate for a liquid filtering apparatus comprising a stack of filter plates on a base support, means for separating the plates to allow the installation of sheets of filter media between adjacent plates and means for closing the plates together to form inlet chambers and collection chambers on opposite sides of each said sheet of filter media, said filter plate comprising: a central planar member; side walls and end walls connected to the sides and ends of said planar member and connected together at their ends to form a continuous rectangular barrier that extends above and below said planar member, said barrier forming an inlet chamber for dirty liquid below said planar member and a collection chamber above said planar member wherein elongated means are attached to said side walls for forming two elongated manifold chambers on opposite sides of each filter plate; inlet openings in one said side wall for allowing the passage of dirty liquid from one of said elongated chambers into the space on the one side of said planar member and openings in the other said side wall for allowing the passage of clean liquid from the other side of said planar member into the other elongated chamber; means on each said elongated means adapted for connection with separate conduit means for supplying dirty liquid to and for removing clean filtrate liquid from each filter plate; and a series of spaced apart liquid distribution means located on one side of said planar member for dispersing incoming dirty liquid substantially evenly over the area of said inlet chamber. Said side walls and end walls may be nominally vertical relative to said central planar member, sloped inner surfaces on said side walls and preferably also on said end walls extending from a level below said central planar member to their bottom inside edges, whereby filter cake that normally builds up on the filter media during operation of the filter is prevented from adhering to the inner surfaces of said side walls and the overall filtering area for the filter plate is maximized. Said inner surface may be sloped outwardly at around $60^{\circ}$ and extends above the bottom edges of said walls for a distance of around 2.5 cms (1 inch).

Preferably said spaced apart liquid distribution means are located on the underside of said planar member and comprise elongated cross members having their ends fixed to opposite side walls each said member being aligned with a said inlet opening and providing elongated narrow outlets for dirty liquid within said inlet chamber. Said inlet openings for dirty liquid in one said side wall may be elongated and spaced apart near the lower edge of the side wall. Each said liquid distribution cross member may have a channel shaped cross section and is aligned with a said inlet opening, said elongated narrow outlets therefrom being formed by spaces between the edges of said channel shaped cross member and the underside of said central planar member.

Conveniently said elongated means for forming said manifold chambers comprise channel members having closed ends and attached to said side walls by weldments along the edges of the channel legs.

It will be appreciated that a filter incorporating filter plates according to the present invention normally comprises a plurality of intermediate filter plates in combination with a bottom plate supported on a base structure and a top plate connected to a suitable lifting jack mechanism. The plates are linked together in a stacked arrangement so that they can be separated to allow for installation and/or advancement of sheets of filter media between plates and thereafter a compression of the plates together to seal inlet and collection chambers on opposite sides of each media sheet. An intermediate filter plate in accordance with the invention comprises generally a central rectangular planar member of rigid and impervious material surrounded on all sides by a continuous wall that extends above and below the planar member. Fixed to each opposite side wall member is a channel forming an elongated manifold chamber. A conduit fitting is attached to an outside opening in each channel which facilitates the flow of dirty liquid into one elongated chamber and the removal of clean liquid from the other one. A series of spaced apart openings is provided in each side wall, a first series providing for the flow of clean liquid into the inlet chamber below the central planar member and a second series on the other side wall providing for the flow of dirty liquid from the collection chamber. An inlet liquid distribution member is aligned with each of the first series of openings to control the flow of incoming liquid across the inlet chamber and the filter media below. These distribution members cause the dirty incoming liquid to flow at a relatively high rate but disperses in such a manner that the filter cake remains substantially intact and is not disturbed or washed away at certain locations. The lower inside surface of the side walls is sloped downwardly and outwardly to form a peripheral undercut area. In this area, filter cake is allowed to build up normally to increase the overall effective filtering area of the filter plate, but it provides an even more important advantage of preventing filter cake from building up on the sloped side wall surface. This enables the filter to operate efficiently and eliminates costly and time consuming cleanup procedures between filtering cycles.

In order that the invention may be more readily understood and so that further features thereof may be appreciated, the invention will now be described by way of example with reference to the accompanying drawings, in which:

FIGURE 1 is a schematic view in side elevation of a liquid filtering apparatus utilizing filter plates according to the invention;

FIGURE 2 is a top view of a filter plate in accordance with the present invention;

FIGURE 3 is a side view in elevation of the filter plate of Figure 2;

FIGURE 4 is an enlarged view in section taken along line 4-4 of Figure 2;

FIGURE 5 is an enlarged view in section taken along line 5-5 of Figure 2;

FIGURE 6 is an enlarged fragmentary view in section taken along line 6-6 of Figure 2; and

FIGURE 7 is a further enlarged fragmentary view showing a portion of two filtering plates together.

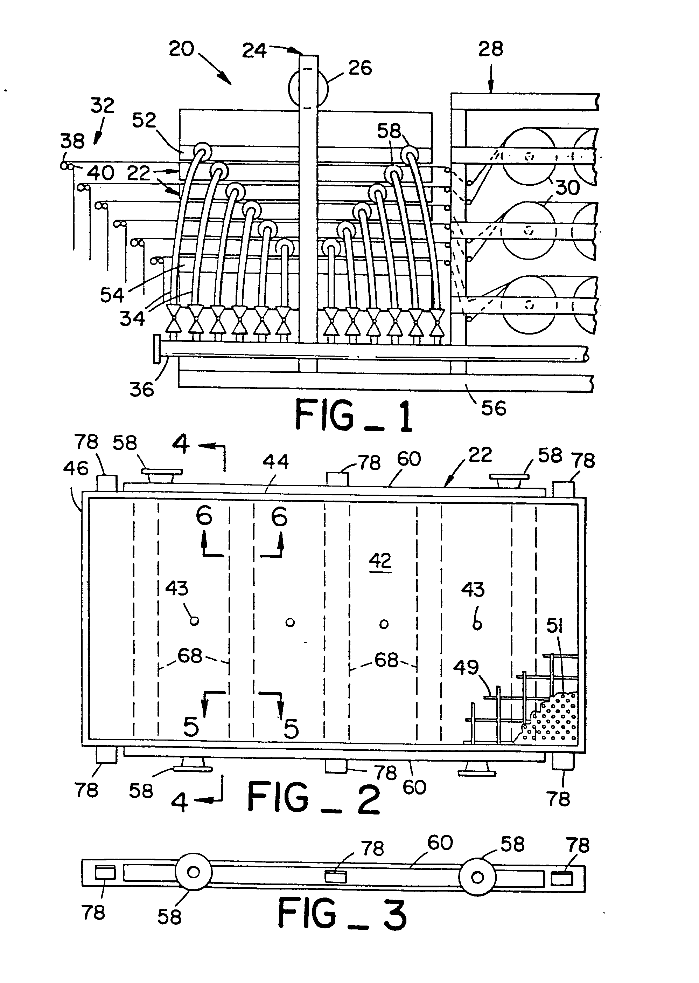

With reference to the drawing, Figure 1 shows a filter apparatus 20 utilizing a series of filter plates 22 in accordance with the present invention. The filter plates are arranged horizontally in a stack, supported by a frame 24 and controlled by a mechanism including a power jack 26 for separating and closing them. On one side of the plates is a supply rack 28 for a series of rolls 30 of filter media and on the opposite side of the plates is an extractor mechanism 32 for removing used filter media and placing new media into position between plates. The filter media may be a suitable paper or woven fabric of a type well known in the art, and a sheet of filter media from each supply roll extends between one pair of adjacent plates to the extractor mechanism. When the plates are closed together, inlet and outlet chambers are formed by them on opposite sides of the filter sheet so that dirty liquid fills the inlet chamber of one plate and clean filtrate collects in the outlet chamber of the next lower plate. Suitable conduits or hoses 34 extend to the filter plates on one side thereof to supply dirty liquid to their inlet chambers and these hoses are connected to a common or main inlet 36 for the dirty liquid. Similar hoses are connected to the opposite sides of the filter plates to remove the filtrate from their outlet chambers and these latter hoses are supplied to a common outlet pipe (not shown).

The extractor mechanism 32 may be of any suitable type, such as shown in U.S.A. Patent Specification No.3,608,734, or it may comprise a series of drive rollers 38, as shown, each having a pinch wheel mechanism 40, such as described in greater detail in copending European Patent Application No.

As shown in Figures 2 to 4, each filter plate 22 according to the invention is comprised of a main, central, rectangular planar member 42 of a rigid material, such as steel or aluminium, and having a uniform thickness. Fixed to the sides of this planar member, as by welding, are side members 44 and end members 46 that are connected at their ends to form a continuous vertical rectangular wall. These side and end wall members are attached so that they extend above and below the central member. Spaced apart along the centre line of each member 42 and extending above and below it to the same level as the side and end wall members, is a series of cylindrical support horns 43. These horns provide additional columnar strength and prevent any excessive flexure of the members 42. On the upper side of each planar member, which is normally covered by a sheet of filter media 30 when the filter is in operation, the upwardly extending side and end members form a collection chamber 48 for the clean filtrate. As with prior art plate filters, a removable grate 49 is provided in the upper collection chamber 48 of each filter plate 22, preferably covered by a perforated sheet 51 of metal or some other material for supporting the filter media 30.

On the lower side of each planar member 42 the downwardly extending lower portions of the side and end members form an inlet chamber 50 for the dirty liquid to be filtered. Thus, when the filter plates 22 are pushed together with sheets of filter media 30 between adjacent plates, the lower inlet chamber of each plate is matched with an upper collection chamber of the plate below.

With the series of intermediate plates 22, which may be provided in any desired number for the filter 20, a top plate 52 and a bottom plate 54 are provided;

as shown in Figure 1. The top plate is attached to the lifting or power jack mechanism 26 and has a central planar member with side and end wall members that provide only an inlet chamber for dirty liquid. The bottom plate 54 which is fixed to a filter base support 56 also has a central member with side and end wall members that form only a collection chamber for clean filtrate. Since these top and bottom plates are essentially the same as upper and lower portions of the full plate 22, they are not shown in detail.

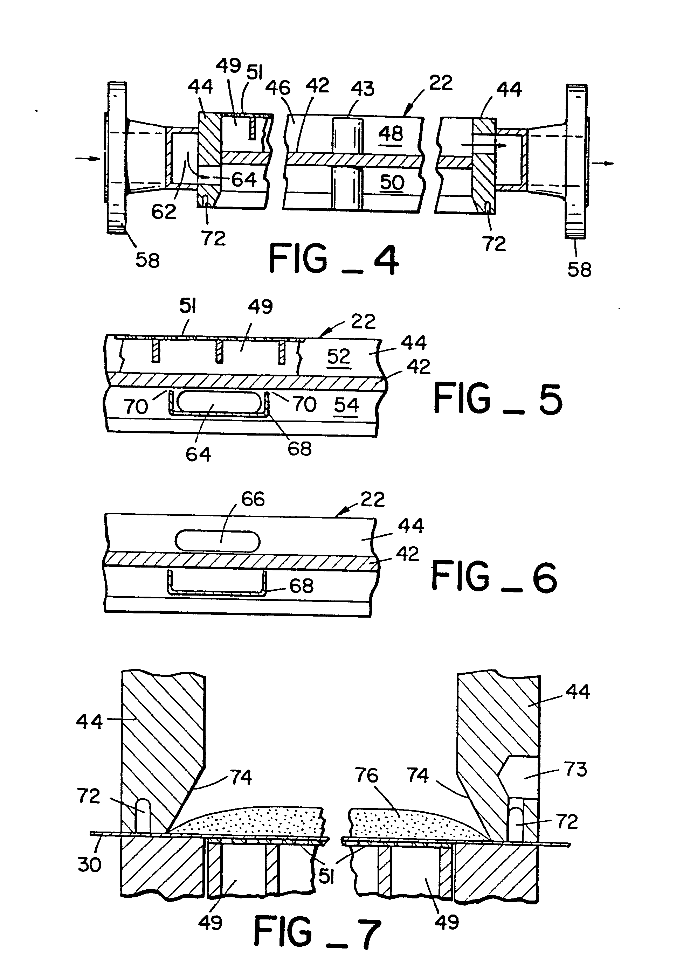

As described previously with reference to Figure 1, dirty liquid to be filtered is supplied from an inlet conduit 36 through flexible hoses 34 to the top plate 52 and to one side of each intermediate filter plate 22 and clean filtrate is removed by similar flexible hoses (not shown) on the opposite sides of the intermediate filter plates and from the bottom plate. On the intermediate filter plates the hoses on both opposite sides are attached to pairs of suitable flanged fittings 58 which are fixed to the sides of the filter plate. As shown in Figure 4, each pair of these latter hose fittings is fixed to a channel member 60 that is welded to a side wall member 44 by weldments along the edges of the channel legs. Each channel member is closed at its ends to form an elongated chamber 62 that extends substantially the entire length of the plate 22 and over a series of spaced apart openings or slots in its sidewalls. On one side of each plate a series of such slots 64, provided for incoming dirty liquid, is located just below the central planar member to provide access to the inlet chamber 50 (See Figure 5). On the other side of the plate 22, a similar series of slots 66 is located above the central planar 42 member to provide openings to the collection chambers 52 of each plate. Thus, on the inlet side of each intermediate filter plate the dirty liquid flows from the inlet hose 34 through an inlet into the elongated chamber 62 formed by the channel 60 and through the slots 64 into the inlet chamber 50. Located around each inlet slot 64, as shown in Figure 5, and extending transversely across each filter plate, is a series of liquid distribution channels 68. Both ends of each of these channels are welded to the inside surface of the opposite side walls 44 below the central planar member and therefore they serve to strengthen the filter plate and make it more rigid. However, a primary purpose of each channel 68 is to provide a means for distributing incoming dirty liquid at a relatively high flow rate but without distributing, by erosion, the filter cake that is normally present on the media below. The upper edges of the opposite flanges for each channel are spaced just below the central planar member to form a uniform, narrow (e.g. 4.7 mm(3/16")) gap 70 across the width of the filter plate. Thus, the incoming dirty liquid flowing through the slots 64 will flow through the gap 70 at a relatively low rate with a reduced force and in a direction that will not disturb the filter cake below.

At the lower edge of the connected side and end wall members for each filter plate is a groove 72 which becomes adjacent to the sheet of filter media when the filter is in operation. At some convenient location, the groove for each filter plate is connected through a side port 73 to a low pressure fluid source, e.g. a partial vacuum source, (not shown) so that it can provide for sealing of the plate against the media.

As shown in Figures 4 and 7, the lower portions of all the side wall and end wall members are tapered by a sloped surface 74 that starts the inner wall surface a short distance from their bottom edges (e.g. 2.5 cms (one inch)) and just below the transverse channels 68 and diverges downwardly and outwardly at a uniform angle (e.g., $60^{O}$). This sloped surface 74, which extends completely around the lower inner wall of the inlet chamber for each filter plate is a feature that provides several advantages for the described filter 20. For one thing, it prevents a filter cake 76, that normally builds up within each inlet chamber, from contacting and adhering to the wall surface of each filter plate. This was a common occurrence with prior art filters having vertical side walls at this point. Thus, with the present filter 20, when it becomes necessary to change filter media and the filter plates are separated, the side walls of the inlet chambers for the plates of the presently described filter are always substantially clean and there is no build-up of filter cake requiring a time-consuming removal procedure. As shown in Figure 7, during the filtering process, the normal flow of liquid through the filter media is substantially vertical and as the filter cake builds up, it normally tapers in thickness within the undercut peripheral area of each filter plate. Thus, at the outermost edge of the plate perimeter, the cake thickness is substantially zero and none of it builds up on the sloped wall surface 74.

Yet another advantage provided by the sloped wall surface 74 is that it provides a substantial increase in effective filtering area for each filter plate with no additional structural requirements. For example, assuming a filter plate having an inlet chamber with width and length dimensions of 1.22 metres (4.8 inches) by 2.44 metres (96 inches) and assuming that the sloped wall surface provides a bordering perimeter strip 1.2 cms (0.5 inches) in width, the increased filtering area per plate would amount to 878 sq.cms (144 square inches) which is a significant increase that increased efficient utilization of the filter 20.

When arranged in the stacked manner, as shown in Figure 1, the filter plates are connected together by suitable linkage and alignment elements (not shown) so that after being separated by the power jack 26, the plates will thereafter close in proper alignment. Each plate is thus provided with six lifting and alignment clips 78 which are fixed to opposite ends of each side wall 44 and cooperate with the linkage and alignment elements in the well known manner.

The construction of the filter plate 22 is relatively simple and can be accomplished using standard production methods with a minimum of labour and without expensive special tooling.

0033603

-1-

CLAIMS:

1. A filter plate for a liquid filtering apparatus (20) comprising a stack of filter plates (22) on a base support, means (26) for separating the plates to allow the installation of sheets of filter media (30) between adjacent plates and means for closing the plate together to form inlet chambers (50) and collection chambers (48) on opposite sides of each said sheet of filter media, said filter plate comprising a central planar member (42); side walls (44) and end walls (46) connected to the sides and ends of said planar member and connected together at their ends to form a continuous rectangular barrier that extends above and below said planar member, said barrier forming an inlet chamber (50) for dirty liquid below sa_d planar member and a collection chamber (48) above said planar member characterised in that elongated means (60) are attached to said side walls for forming two elongated manifold chambers (62) on opposite sides of each filter plate (22); inlet openings (64) in one said side wall for allowing the passage of dirty liquid from one of said elongated chambers (62) into the space on one side of said planar member and openings (66) in the other said side wall for allowing the passage of clean liquid from the other side of said planar member into the other elongated chamber (62); means (58) on each said elongated means (60) adapted for connection with separate conduit means (34) for supplying dirty liquid to and for removing clean filtrate liquid from each filter plate; and a series of spaced apart liquid distribution means (68) located on one side of said planar member 42 for dispersing incoming dirty liquid substantially evenly over the area of said inlet chamber.

2. A filter plate according to claim 1 characterised in that said side walls (44) and end walls (46) are nominally vertical relative to said central planar member (42), sloped inner surfaces (74) on said side walls (44) extending from a level below said central planar member to their bottom inside edges, whereby filter cake that normally builds up on the filter media during operation of the filter is prevented from adhering to the inner surfaces of said side walls and the overall filtering area for the filter plate is maximised.

3. A filter plate according to claim 2 characterised in that corresponding sloped inner surfaces are formed on said end walls.

4. A filter plate according to claim 2 or 3 characterised in that said inner surface is sloped outwardly at around $60^{\circ}$ and extends above the bottom edges of said walls for a distance of around 2.5 cms (1 inch).

5. A filter plate according to any one of the preceding claims characterised in that said spaced apart liquid distribution means (68) are located on the underside of said planar member (42) and comprise elongated cross members having their ends fixed to opposite side walls (44) each said member being aligned with a said inlet opening (64) and providing elongated narrow outlets (70) for dirty liquid within said inlet chambers (50).

6. A filter plate according to claim 5 characterised in that said inlet openings (64) for dirty liquid in one said side wall are elongated and spaced apart near the lower edge of the side wall (44).

7. A filter plate according to claim 6 characterised in that each said liquid distribution cross member (68) has a channel shaped cross section and is aligned with a said inlet opening (64) said elongated narrow outlets (70) therefrom being formed by spaces between the edges of said channel shaped cross member (68) and the underside of said central planar member (42).

8. A filter plate according to any one of the preceding claims characterised in that said elongated means (60) for forming said manifold chambers (62) comprise channel members having closed ends and attached to said side walls by weldments along the edges of the channel legs.

9. A filter plate according to any one of the preceding claims characterised in that a groove (72) is provided in the lowermost edge of said barrier, there being means (73) to connect said groove (72) to a source of low fluid pressure.

10. A filter characterised in that said filter incorporates a plurality of plates according to any one of the preceding claims.

FIG _ 1

FIG _ 2

FIG _ 3

FIG _ 4

FIG _ 5

FIG _ 6

FIG _ 7